# EUROPEAN PATENT APPLICATION

(11) **EP 4 712 660 A1**
(43) Date of publication of application: **18.03.2026**
(21) Application number: 23936090.2
(22) Date of filing: 10.05.2023
(51) Int. Cl.: H04W 72/40

(54) **METHOD AND APPARATUS FOR PROCESSING SIDELINK CONTINUOUS LISTEN-BEFORE-TALK FAILURE**

(71) Applicant: Beijing Xiaomi Mobile Software Co., Ltd., Beijing 100085 (CN)
(72) Inventor: XIONG, Yi, Beijing 100085 (CN)
(74) Representative: Hersina, Günter
(86) International application number: PCT/CN2023/093342
(87) International publication number: WO 2024/229769

(57) **Abstract**

Disclosed in embodiments of the present disclosure are a method and apparatus for a sidelink (SL) continuous listen-before-talk (LBT) failure, applicable to systems such as Internet of vehicles, V2X, and V2V. The method comprises: when detecting that an SL continuous LBT failure is triggered on a resource block set (RB set), a terminal device performs resource reselection. By implementing the embodiments of the present disclosure, when detecting that an SL continuous LBT failure is triggered on an RB set, a terminal device can perform resource reselection, ensuring timely recovery of SL communication when the SL continuous LBT failure occurs in the terminal device, thereby improving the communication efficiency of the SL communication of the terminal device.

## Description

### FIELD

The present disclosure relates to the field of communication technologies, and in particular to a method and an apparatus for handling sidelink (SL) consistent listen before talk (LBT) failures.

### BACKGROUND

In order to support a direct communication between terminals, a sidelink (also known as SL) communication scheme has been introduced, and the interface between the terminals is PC-5. Depending on a correspondence between a sending terminal and a receiving terminal, three transmission schemes, such as unicast, multicast, and broadcast are supported over the sidelink.

For release 18 (R18) sidelink, operation in an unlicensed spectrum is supported. The sidelink communication can utilize the unlicensed spectrum. The unlicensed spectrum is open and can be effectively utilized to improve a performance and rate. This scenario can be referred as Sidelink-U (Sidelink-Unlicensed) scenario. A terminal also needs to perform listen before talk (LBT) when transmitting sidelink data in the unlicensed spectrum. A consistent LBT mechanism is also applicable to the sidelink communication in the unlicensed spectrum.

However, there is currently a lack of effective solutions for handling SL consistent LBT failures.

### SUMMARY

Embodiments of the present disclosure provide a method and apparatus for handling a sidelink (SL) consistent listen before talk (LBT) failure, which can be applied to the Internet of vehicles, such as vehicle to everything (V2X) communication, long term evolution-vehicle (LTE-V) communication, vehicle to vehicle (V2V) communication, etc., or can also be used in fields such as intelligent driving and intelligent connected vehicles, to ensure timely recovery of the sidelink communication when the SL consistent LBT failures occur on a terminal, thereby improving a communication efficiency of the terminal in performing the sidelink communication.

In a first aspect, embodiments of the present disclosure provide a method for processing SL consistent LBT failures. The method is performed by a terminal, including: detecting that the SL consistent LBT failures are triggered on a resource block set (RB set), and performing a resource reselection.

In this technical solution, by performing the resource reselection when the terminal detects that the SL consistent LBT failures are triggered on the RB set, a timely recovery of the sidelink communication of the terminal can be ensured when the SL consistent LBT failures occur, thereby improving a communication efficiency of the terminal in performing the sidelink communication.

In a second aspect, embodiments of the present disclosure provide an apparatus for handling a sidelink (SL) consistent listen before talk (LBT) failure, including: a processing module, configured to detect that the SL consistent LBT failures are triggered on a resource block set (RB set); in which the processing module is further configured to perform a resource reselection.

In this technical solution, by performing the resource reselection when the apparatus detects that the SL consistent LBT failures are triggered on the RB set, a timely recovery of the sidelink communication of the apparatus can be ensured when the SL consistent LBT failures occur, thereby improving a communication efficiency of the apparatus in performing the sidelink communication.

In a third aspect, embodiments of the present disclosure provide a communication device. The communication device includes a processor. When the processor calls a computer program in a memory, the method as described in the first aspect is performed.

In a fourth aspect, embodiments of the present disclosure provide a communication device. The communication device includes a processor and a memory. The memory is stored with a computer program, and the processor is configured to execute the computer program stored in the memory, so that the communication device performs the method as described in the first aspect.

In a fifth aspect, embodiments of the present disclosure provide a communication device. The communication device includes a processor and an interface circuit. The interface circuit is configured to receive code instructions and transmit the code instructions to the processor, and the processor is configured to run the code instructions, so that the communication device performs the method as described in the first aspect.

In a sixth aspect, embodiments of the present disclosure provide a computer-readable storage medium. The computer-readable storage medium is configured to store instructions used by the terminal above. When the instructions are executed, the terminal performs the method as described in the first aspect.

In a seventh aspect, embodiments of the present disclosure provide a computer program product including a computer program. When the computer program is running on a computer, the computer is caused to perform the method as described in the first aspect.

In an eighth aspect, embodiments of the present disclosure provide a chip system. The chip system includes at least one processor and an interface, and is configured to support a terminal to implement functions involved in the first aspect, for example, to determine or process at least one of data or information involved in the above methods. In a possible design, the chip system further includes a memory. The memory is configured to save a necessary computer program and data for the terminal. The chip system can be constituted by a chip, or can include a chip and other discrete devices.

In a ninth aspect, embodiments of the present disclosure provide a computer program. When the computer program is running on a computer, the computer is caused to perform the method as described in the first aspect.

### BRIEF DESCRIPTION OF THE DRAWINGS

In order to explain illustrate solutions in the embodiments of the present disclosure or the related art more clearly, the drawings needed for use in the embodiments of the present disclosure or in the related art will be briefly introduced below.
FIG. 1 is a diagram illustrating an architecture of a communication system according to an embodiment of the present disclosure.
FIG. 2 is a flow chart illustrating a method for handling a sidelink (SL) consistent listen before talk (LBT) failure according to an embodiment of the present disclosure.
FIG. 3 is a flow chart illustrating another method for handling SL consistent LBT failures according to an embodiment of the present disclosure.
FIG. 4 is a flow chart illustrating another method for handling SL consistent LBT failures according to an embodiment of the present disclosure.
FIG. 5 is a flow chart illustrating another method for handling SL consistent LBT failures according to an embodiment of the present disclosure.
FIG. 6 is a block diagram illustrating a communication device according to an embodiment of the present disclosure.
FIG. 7 is a block diagram illustrating another communication device according to an embodiment of the present disclosure.
FIG. 8 is a block diagram illustrating a chip according to an embodiment of the present disclosure.

### DETAILED DESCRIPTION

Embodiments of the present disclosure are described in detail below, and examples of the embodiments are illustrated in the accompanying drawings, throughout which the same or similar symbols indicate the same or similar components or components with the same or similar functions. The embodiments described below with reference to the accompanying drawings are exemplary and are intended to be used to explain the present disclosure and are not to be construed as a limitation of the present disclosure. In the description of the present disclosure, unless otherwise specified, "/" indicates an "or" relationship. For example, A/B indicates A or B; the term "and/or" in this text is simply a way of describing an association relationship of associated objects, indicating that there can be three types of relationships. For example, A and/or B means: A exists alone, A and B exist at the same time, and B exists alone.

The terms used in the embodiments of the present disclosure are for the purpose of describing particular embodiments only, and are not intended to limit the present disclosure. The singular forms "a", "an" and "the" used in the embodiments of the present disclosure and the appended claims are also intended to include plural forms, unless the context clearly indicates otherwise.

It should be understood that although terms such as "first", "second", and "third" can be used in the embodiments of the present disclosure to describe various types of information, such information should not be limited to these terms. These terms are only used to distinguish between information of the same type. For example, without departing from the scope of the embodiments of the present disclosure, first information can also be referred as second information, and similarly, the second information can also be referred as the first information. Depending on the context, term "if" and "in case that" as used herein can be interpreted as "when", "upon", or "in response to determining...".

It should be noted that, the method in any embodiment of the present disclosure can be performed individually, or in combination with possible implementations of other embodiments, or in combination with any technical solution in the related art.

The following describes embodiments of the present disclosure in detail. Examples of the embodiments are shown in the accompanying drawings, throughout which the same or similar symbols indicate the same or similar elements. The embodiments described with reference to the accompanying drawings are exemplary and are intended to explain the present disclosure, and shall not be construed as a limitation on the present disclosure.

To facilitate understanding, terms related to the present disclosure is first introduced.

### 1. Listen before talk (LBT).

In new-radio in unlicensed spectrum (NR-U), when accessing an uplink channel or a downlink channel, a terminal needs to perform the LBT first. That is, the terminal must sense a communication channel first to determine whether the channel is busy. If the channel is detected to be busy, the LBT fails, and the terminal needs to wait for a period of time before performing the LBT again.

### 2. Consistent LBT failures (Continuous LBT failures).

Consistent LBT failures are a new feature defined in the NR-U system. The terminal counts a number of uplink LBT failures on each bandwidth part (BWP). A network device configures, via a radio resource control (RRC) signaling (Lbt-FailureRecoveryConfig), a maximum number of consistent LBT failures (Lbt-FailureInstanceMaxCount) and a consistent LBT failure detection timer (Lbt-FailureDetectionTimer) for the terminal per serving cell, for counting the consistent LBT failures. The terminal maintains a variable for each cell, such as a LBT_counter, with an initial value of zero. For each activated cell configured with Lbt-FailureRecoveryConfig, when the terminal receives an LBT failure indication submitted by the physical layer, the terminal starts or restarts the Lbt-FailureDetectionTimer and increments the variable by one. When the variable is greater than or equal to the Lbt-FailureInstanceMaxCount, the consistent LBT failures are triggered on an active bandwidth part (BWP) of the cell. When the Lbt-FailureDetectionTimer expires, a higher layer reconfigures the Lbt-FailureInstanceMaxCount or the Lbt-FailureDetectionTimer, or all the consistent LBT failures on the cell are canceled, the terminal resets the variable to zero. When the terminal detects the consistent LBT failures on an active BWP of a primary cell (PCell) or a primary secondary cell (PSCell), if there are other BWP configured with a physical random access channel (PRACH) resource of this cell, the terminal triggers a BWP switch to a BWP configured with the PRACH resource and initiates a random access channel (RACH) procedure. If the terminal detects the consistent LBT failures on all N BWPs configured with the PRACH resource of the primary cell, the termina initiates a radio link failure (RLF) recovery procedure. If the consistent LBT failures are detected on the active BWP of the secondary cell (SCell), the terminal indicates a cell identifier of the cell where the consistent LBT failures occurred to the network device via a media access control (MAC) control element (CE). The MAC CE can carry the cell identifiers of multiple cells where the consistent LBT failures were detected, and the MAC CE is transmitted via other serving cells where the consistent LBT failures do not occur. If a MAC protocol data unit (PDU) containing the consistent LBT failures of the MAC CE is successfully transmitted, the terminal cancels a consistent LBT failure state for the cell where the consistent LBT failures occur as indicated by that MAC CE. If the consistent LBT failures are triggered on the PCell or PSCell and the RACH procedure is completed successfully, the terminal cancels a consistent LBT failure state for the PCell or the PSCell. If the terminal receives a physical downlink control channel (PDCCH) indicating a BWP switch for a serving cell, the terminal cancels a consistent LBT failure state for the cell.

It should be noted that, in order to support a direct communication between terminals, a sidelink (also known as SL) communication scheme has been introduced, and an interface between the terminals is PC-5. Depending on a correspondence between a sending terminal and a receiving terminal, three transmission schemes, such as unicast, multicast, and broadcast are supported over the sidelink. The sending terminal transmits sidelink control information (SCI) on a physical sidelink control channel (PSCCH) and transmits second-stage SCI on a physical sidelink shared channel (PSSCH), which carries a resource location for transmitting data as well as a source identifier, and a target identifier. For a data packet for which a hybrid automatic repeat request (HARQ) feedback is enabled, the receiving terminal provides a hybrid automatic repeat request acknowledgement (HARQ-ACK) feedback for the PSSCH on a physical sidelink feedback channel (PSFCH).

There are two transmission resource allocation modes for the sidelink communication: one is a network dynamically scheduled mode (i.e., a first allocation mode, also known as mode 1), and the other one is an autonomous selection mode where the terminal autonomously selects resources from a network-configured or pre-configured resource pool (i.e., a second allocation mode, also known as mode 2). In the dynamically scheduled mode, the network allocates a transmission resource on the sidelink to the terminal based on cache data reported by the terminal. In the autonomous selection mode, the terminal randomly selects the transmission resource from the network-configured or pre-configured resource pool by itself. The network can configure multiple resource pools for the terminal on a single BWP. The network configures a specific allocation mode to be used via a RRC signaling.

NR-U is a project established by 3rd generation partnership project (3GPP) in release R16, providing a necessary technology for operators to fully integrate unlicensed spectrum into 5G networks. NR-U supports both uplink and downlink operations in unlicensed frequency bands. In NR-U, channel access for both downlink and uplink relies on a listen before talk (LBT) feature. A wireless device or base station must first "sense" the communication channel to ensure that there is no communication before any transmission. When a communication channel is an unlicensed wideband carrier (e.g., several hundred megahertz), an LBT procedure relies on detecting energy levels across multiple sub-bands of the communication channel. LBT parameters (such as type/duration, clear channel assessment parameters, etc.) are configured by the base station on the wireless device.

For release 18 (R18) sidelink, operation in the unlicensed spectrum is supported. The sidelink communication can utilize the unlicensed spectrum for communication. The unlicensed spectrum is open and can be effectively utilized to improve a performance and rate. This scenario can be referred as unlicensed spectrum of the Sidelink-U (Sidelink-Unlicensed) scenario. The terminal also needs to perform the LBT when transmitting the sidelink data in the unlicensed spectrum. A consistent LBT mechanism is also applicable to the sidelink communication in the unlicensed spectrum. However, there is currently a lack of effective solution for handling SL consistent LBT failures.

Thus, embodiments of the present disclosure provide a method and an apparatus for handling the SL consistent LBT failures. By performing a resource reselection when the terminal detects that the SL consistent LBT failures are triggered on an RB set, a timely recovery of the sidelink communication can be ensured when the SL consistent LBT failures occur for the terminal, thereby improving a communication efficiency of the terminal in performing the sidelink communication.

In order to better understand the method and apparatus for handling the SL consistent LBT failures in the embodiments of the present disclosure, a communication system to which embodiments of the present disclosure are applicable is described below.

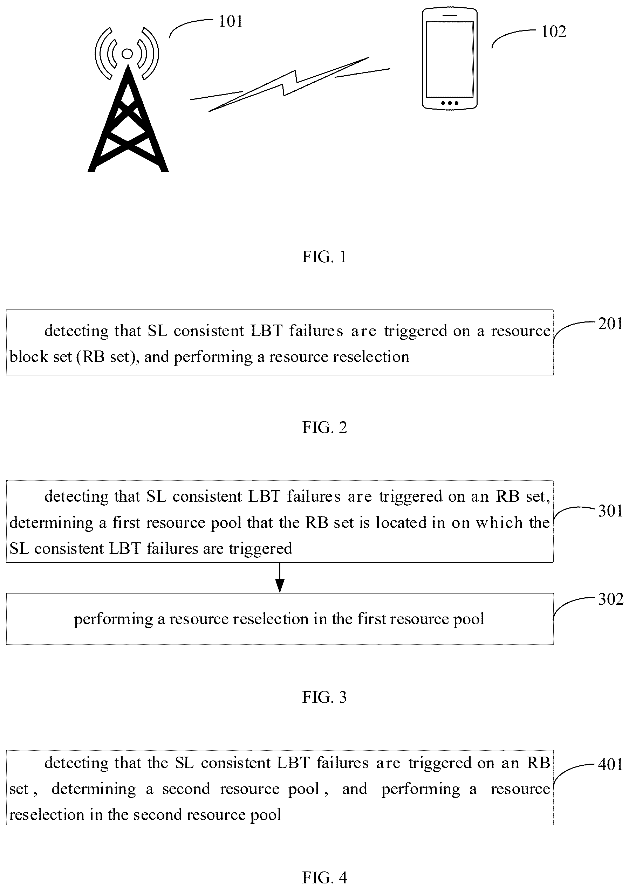

Please refer to FIG. 1. FIG. 1 is a diagram illustrating an architecture of a communication system according to an embodiment of the present disclosure. The communication system can include, but is not limited to, one network device and one terminal. The number and forms of the devices illustrated in FIG. 1 are only for example and do not constitute a limitation to embodiments of the present disclosure, and two or more network devices and two or more terminals can be included in practical applications. The communication system as illustrated in FIG. 1 includes one network device 101 and one terminal 102 for example.

It should be noted that technical solutions in embodiments of the present disclosure are applicable to various communication systems, such as a long term evolution (LTE) system, a 5th generation (5G) mobile communication system, a 5G new radio (NR) system or other future new mobile communication systems, etc. It should also be noted that the sidelink in the embodiments of the present disclosure can also be called a side link or a direct link.

The network device 101 in embodiments of the present disclosure is an entity, at a network side, for transmitting or receiving a signal. For example, the network device 101 can be an evolved NodeB (eNB), a transmission reception point (TRP), a next generation NodeB (gNB) in a NR system, a base station in other future mobile communication systems, an access node in a wireless fidelity (WiFi) system, or the like. A specific technology and a specific device form adopted by the network device are not limited in embodiments of the present disclosure. The network device according to embodiments of the present disclosure can consist of a centralized unit (CU) and a distributed unit (DU). The CU can also be referred to as a control unit. The protocol layers of the network device, such as a base station, can be split by using a structure of the CU-DU, so that functions for a part of the protocol layers are placed in the CU for central control, and functions of a remaining part or all of the protocol layers are distributed in the DU, and the DU is centrally controlled by the CU.

The terminal 102 in embodiments of the present disclosure is an entity, at a user side, for receiving or transmitting a signal, for example, a mobile phone. The terminal can be referred to as a user equipment (UE), a mobile station (MS), a mobile terminal (MT), etc. The terminal can be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology and a specific device form adopted by the terminal are not limited in embodiments of the present disclosure.

It can be understood that, the communication system described in embodiments of the present disclosure is intended to explain technical solutions of embodiments of the present disclosure more clearly, and does not constitute a limitation to the technical solutions provided by embodiments of the present disclosure. Those skilled in the art can know that, with evolution of a system architecture and emergence of a new service scenario, the technical solutions provided in embodiments of the present disclosure are also applicable to similar technical problems.

A method and an apparatus for handling sidelink (SL) consistent listen-before-talk (LBT) failures provided in the present disclosure are described in detail below with reference to the accompanying drawings.

Please refer to FIG. 2, which is a flow chart illustrating a method for handling SL consistent LBT failures according to an embodiment of the present disclosure. It should be noted that, the method is performed by a terminal. As shown in FIG. 2, the method can include but is not limited to the following steps.

In step 201, if it is detected that the SL consistent LBT failures are triggered on a resource block set (RB set), a resource reselection is performed.

In an embodiment of the present disclosure, a granularity of the SL consistent LBT failures can be an RB set level. That is, the terminal counts whether a number of SL consistent LBT failures on an RB set within a certain period of time reaches a preset number, and determines whether the SL consistent LBT failures are triggered on the RB set.

As an example of a possible implementation, the terminal can count a number of SL LBT failures on the RB set. A network device configures, for the terminal via an RRC signaling (e.g., sl-Lbt-FailureRecoveryConfig), a maximum number of SL consistent LBT failures (e.g., sl-Lbt-FailureInstanceMaxCount) and a SL consistent LBT failure detection timer (e.g., sl-Lbt-FailureDetectionTimer) for each RB set, resource pool, or BWP. The maximum number of the SL consistent LBT failures and the SL consistent LBT failure detection timer are used for counting the consistent LBT failures.

In this example, the terminal can maintain a variable, such as an LBT counter (LBT_counter) variable, for each RB set. An initial value of the variable is zero. When the terminal receives an LBT failure indication submitted by the physical layer, the terminal starts or restarts the consistent LBT failure detection timer and increments the LBT_counter variable by 1. When the LBT_counter variable is greater than or equal to the maximum number of consistent LBT failures, SL consistent LBT failures are triggered on an RB set associated with this LBT_counter variable. When the SL consistent LBT failure detection timer expires, or when a higher layer reconfigures the maximum number of SL consistent LBT failures and/or the SL consistent LBT failure detection timer, the terminal resets the LBT_counter variable to zero. When the terminal detects that SL consistent LBT failures are triggered on an RB set, the terminal performs a resource reselection. For example, the terminal can reselect an RB set or reselect a resource pool. The RB set reselected or resource pool reselected does not trigger the SL consistent LBT failures.

By implementing the embodiments of the present disclosure, when the terminal detects that SL consistent LBT failures are triggered on an RB set, a resource reselection is performed. It can ensure that a sidelink communication can be recovered timely when the SL consistent LBT failures occur for the terminal, thereby improving a communication efficiency of the terminal in performing the sidelink communication.

Please refer to FIG. 3, which is a flow chart illustrating another method for handling sidelink (SL) consistent listen-before-talk (LBT) failures according to an embodiment of the present disclosure. It should be noted that, the method is performed by a terminal. As shown in FIG. 3, the method can include but is not limited to the following steps.

In step 301, if it is detected that SL consistent LBT failures are triggered on an RB set, a first resource pool that the RB set is located in is determined, on which the SL consistent LBT failures are triggered.

In an embodiment of the present disclosure, an implementation of detecting that the SL consistent LBT failures are triggered on the RB set can refer to the description provided in the aforementioned step 201 regarding the implementation of detecting that the SL consistent LBT failures are triggered on the RB set, and details will not be repeated here.

It should be noted that, in an embodiment of the present disclosure, an allocation mode of a SL transmission resource for the terminal is a second allocation mode, which is a mode that the terminal autonomously selects its transmission resources. That is, the terminal can operate in the second allocation mode (i.e., the aforementioned mode 2). Optionally, the terminal can be in an RRC connected state, or can be in an RRC INACTIVE/IDLE state, or can be out of coverage (OOC). In other embodiments of the present disclosure, the terminal can operate in the second allocation mode (i.e., the aforementioned mode 2), and the terminal can be in any one of the RRC INACTIVE state, the RRC IDLE state, and OOC.

It should be noted that, in an embodiment of the present disclosure, a resource pool can include L RB sets, and L is a positive integer. That is, a resource pool granularity can be greater than an RB set granularity. For example, the resource pool can include an integer number of RB sets. In this scenario, when the terminal detects that SL consistent LBT failures are triggered on an RB set, the terminal performs a resource reselection. The terminal determines a first resource pool that the RB set is located in, on which the SL consistent LBT failures are triggered. In other words, the terminal can first consider reselecting a resource within the same resource pool, meaning the terminal can first reselect a resource within a resource pool that the RB set is located in, on which the SL consistent LBT failures are triggered.

In step 302, a resource reselection is performed in the first resource pool.

In an implementation, the terminal can select, from the first resource pool, a resource in a first RB set, and the first RB set is an RB set on which the SL consistent LBT failures are not triggered. That is, the terminal can reselect, from the first resource pool, a resource in other RB sets on which the SL consistent LBT failures are not triggered. For example, the resource reselected may need to meet other conditions in some related technologies, including but not limited to a number of retransmissions, a remaining packet delay budget (PDB) of a logical channel with data to transmit, etc. The present disclosure does not make a limitation on it, and will not repeat it here. The present disclosure considers whether the terminal reselects an RB set or reselects a resource pool if the terminal detects that SL consistent LBT failures are triggered on one RB set, and whether a relationship between a size of the resource pool and a size of the RB set affects a behavior of the terminal.

Optionally, in some embodiments of the present disclosure, when the terminal detects that SL consistent LBT failures are triggered on an RB set, the terminal first determines a first resource pool that the RB set is located in, on which the SL consistent LBT failures are triggered, and the terminal determines whether sufficient resources are available in the first resource pool. If the terminal determines that sufficient resources are not available in the first resource pool, the terminal determines a second resource pool and performs the resource reselection in the second resource pool. That is, when the terminal detects that consistent LBT failures are triggered on an RB set, the terminal reselects a resource within the same resource pool. If the same resource pool does not include sufficient resources, the terminal reselects a resource pool.

In an embodiment of the present disclosure, sufficient resources being not available in the first resource pool includes at least one of:: the first resource pool not including the first RB set, and the first RB set is the RB set on which the SL consistent LBT failures is not triggered; or the first resource pool including the first RB set, and the first RB set not including sufficient resources to meet a transmission of the terminal.

In this embodiment, the sufficient resources being not available in the first resource pool includes: the first resource pool not including the first RB set, and the first RB set is the RB set on which the SL consistent LBT failures are not triggered. That is, if the SL consistent LBT failures are triggered on all RB sets in the first resource pool and for all RB sets a state that the SL consistent LBT failures are triggered has not been canceled, it can be determined that sufficient resources are not available in the first resource pool.

In this embodiment, the sufficient resources being not available in the first resource pool includes: the first resource pool including the first RB set, and the first RB set not including sufficient resources to meet the transmission of the terminal. That is, if the first resource pool includes some RB sets on which the SL consistent LBT failures are not triggered, but these RB sets do not include sufficient resources to meet the transmission of the terminal, it can be determined that sufficient resources are not available in the first resource pool. As an example, meeting the transmission of the terminal can refer to meeting conditions such as a number of retransmissions and/or remaining PDB requirements of logical channel (LCH) data to be transmitted. The present disclosure does not make a limitation on it, and will not repeat it here. It can be determined by the terminal whether there are sufficient resources to meet a transmission requirement.

In this embodiment, the sufficient resources being not available in the first resource pool includes: the first resource pool including M or more RB sets on which the SL consistent LBT failures are triggered, the state that the SL consistent LBT failures are triggered being not canceled, and M being a positive integer. That is, if the first resource pool includes M or more RB sets on which the SL consistent LBT failures are triggered and for the state that the SL consistent LBT failures are triggered is not canceled, the terminal determines that sufficient resources are not available in the first resource pool. It should be noted that, as an example, M can be obtained through a network configuration or pre-configuration. Optionally, M can be configured based on a resource pool granularity, or it can be configured based on a terminal granularity. For instance, a terminal in an RRC connected state can obtain M via a dedicated signaling. A terminal in an RRC IDLE/INACTIVE state can obtain M through a system information block (SIB). A terminal that is out of coverage (OOC) can obtain M through a pre-configuration.

It should be noted that the above-mentioned embodiments are not exhaustive and serve only as illustrations of some embodiments. The above-mentioned embodiments can be implemented individually or in combination with others. The above-mentioned embodiments are for illustrative purposes only and do not constitute specific limitations to the scope of protection of the embodiments of the present disclosure.

In an embodiment of the present disclosure, if the terminal determines that sufficient resources are not available in the first resource pool, the terminal can reselect a resource pool, meaning that the terminal can determine a second resource pool. As an example, the second resource pool includes at least one RB set on which the SL consistent LBT failures are not triggered, or the second resource pool includes at least N RB sets on which the SL consistent LBT failures are not triggered, and N is a positive integer. The terminal can select, from the second resource pool, a resource in the RB set on which the SL consistent LBT failures are not triggered.

It should be noted that, as an example, N can be obtained through the network configuration or pre-configuration. Optionally, N can be configured based on the resource pool granularity, or it can be configured based on the terminal granularity. For instance, the terminal in the RRC connected state can obtain N via the dedicated signaling. The terminal in the RRC IDLE/INACTIVE state can obtain N through the SIB. The terminal that is out of coverage (OOC) can obtain N through the pre-configuration.

By implementing the embodiments of the present disclosure, when the terminal detects that the SL consistent LBT failures are triggered on the RB set, the terminal can reselect the resource within the same resource pool. When the same resource pool does not include sufficient resources, the terminal reselects a resource pool. It can ensure that a sidelink communication can be recovered timely when the SL consistent LBT failures occur for the terminal, thereby improving a communication efficiency of the terminal in performing the sidelink communication.

Please refer to FIG. 4, which is a flow chart illustrating another method for handling sidelink (SL) consistent listen-before-talk (LBT) failures according to an embodiment of the present disclosure. It should be noted that, the method is performed by a terminal. As shown in FIG. 4, the method can include but is not limited to the following steps.

In step 401, when it is detected that SL consistent LBT failures are triggered on an RB set, a second resource pool is determined, and a resource reselection is performed in the second resource pool.

In an embodiment of the present disclosure, an implementation of detecting that the SL consistent LBT failures are triggered on the RB set can refer to the description provided in the aforementioned step 201 regarding the implementation of detecting that the SL consistent LBT failures are triggered on the RB set, and details will not be repeated here.

It should be noted that, in an embodiment of the present disclosure, an allocation mode of a SL transmission resource for the terminal is a second allocation mode, which is a mode that the terminal autonomously selects its transmission resources. That is, the terminal can operate in the second allocation mode (i.e., the aforementioned mode 2). Optionally, the terminal can be in an RRC connected state, or can be in an RRC INACTIVE/IDLE state, or can be out of coverage (OOC). In other embodiments of the present disclosure, the terminal can operate in the second allocation mode (i.e., the aforementioned mode 2), and the terminal can be in any one of the RRC INACTIVE state, the RRC IDLE state, and OOC.

It should be noted that, in an embodiment of the present disclosure, a resource pool can include L RB sets, and L is a positive integer. That is, a resource pool granularity can be greater than an RB set granularity. For example, the resource pool can include an integer number of RB sets. In this scenario, when the terminal detects that SL consistent LBT failures are triggered on an RB set, the terminal performs a resource reselection. For example, the terminal directly reselects a new resource pool. For example the terminal determines a second resource pool, which is not the same as the resource pool that an RB set on which SL the consistent LBT failures are triggered is located in. The terminal reselects a resource in the second resource pool.

In an implementation, the second resource pool can include at least one RB on which the SL consistent LBT failures are not triggered, or the second resource pool can include at least N RB sets on which the SL consistent LBT failures are not triggered, and N is a positive integer. The terminal can reselect, from the second resource pool, a resource in the RB set on which the SL consistent LBT failures are not triggered. In the embodiments of the present disclosure, the terminal can select, from the second resource pool, a resource in the RB set on which the SL consistent LBT failures are not triggered.

It should be noted that, as an example, N can be obtained through a network configuration or pre-configuration. Optionally, N can be configured based on ae resource pool granularity, or it can be configured based on a terminal granularity. For instance, a terminal in an RRC connected state can obtain N via a dedicated signaling. A terminal in an RRC IDLE/INACTIVE state can obtain N through a system information block (SIB). A terminal that is out of coverage (OOC) can obtain N through a pre-configuration.

By implementing the embodiments of the present disclosure, when the terminal detects that the SL consistent LBT failures are triggered on the RB set, the terminal can directly reselect a resource pool and reselect a resource in the resource pool reselected. It can ensure that a sidelink communication can be recovered timely when the SL consistent LBT failures occur for the terminal, thereby improving a communication efficiency of the terminal in performing the sidelink communication.

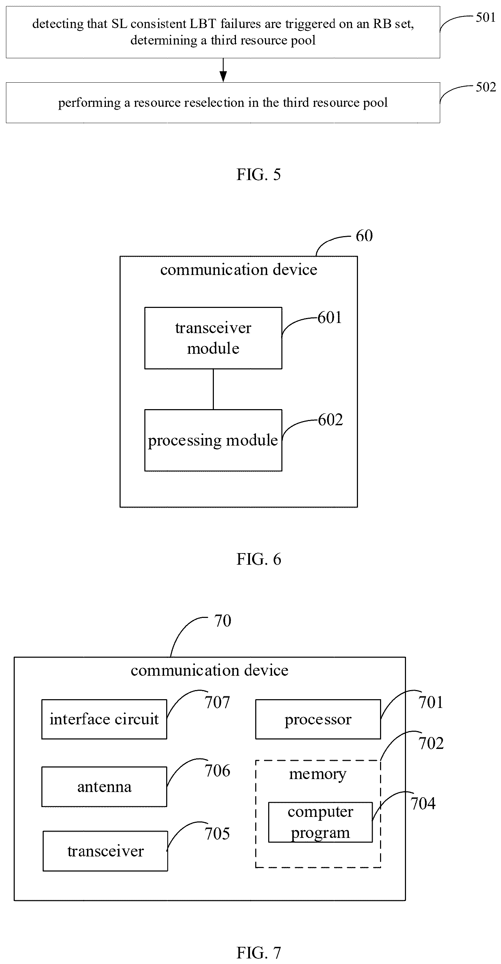

Please refer to FIG. 5, which is a flow chart illustrating another method for handling sidelink (SL) consistent listen-before-talk (LBT) failures according to an embodiment of the present disclosure. It should be noted that, the method is performed by a terminal. As shown in FIG. 5, the method can include but is not limited to the following steps.

In step 501, when it is detected that SL consistent LBT failures are triggered on an RB set, a third resource pool is determined.

In an embodiment of the present disclosure, the third resource pool includes a partial physical resource block (PRB) of one or more RB sets, and the third resource pool does not belong to an RB set on which the SL consistent LBT failures are triggered, and the SL consistent LBT failures are not triggered on either of RB sets to which the third resource pool belongs.

In an embodiment of the present disclosure, an implementation of detecting that the SL consistent LBT failures are triggered on the RB set can refer to the description provided in the aforementioned step 201 regarding the implementation of detecting that the SL consistent LBT failures are triggered on the RB set, and details will not be repeated here.

It should be noted that, in an embodiment of the present disclosure, an allocation mode of a SL transmission resource for the terminal is a second allocation mode, which is a mode that the terminal autonomously selects its transmission resources. That is, the terminal can operate in the second allocation mode (i.e., the aforementioned mode 2). Optionally, the terminal can be in an RRC connected state, or can be in an RRC INACTIVE/IDLE state, or can be out of coverage (OOC). In other embodiments of the present disclosure, the terminal can operate in the second allocation mode (i.e., the aforementioned mode 2), and the terminal can be in any one of the RRC INACTIVE state, the RRC IDLE state, and OOC.

It should be noted that, in the embodiments of the present disclosure, this embodiment is applicable to a scenario where a resource pool can include a partial PRB of one or more RB sets. That is, a resource pool granularity is smaller than an RB set granularity. For example, a resource pool can include a partial PRB of one RB set, or the resource pool can include a partial PRB of multiple RB sets. In this scenario, when the terminal detects that the SL consistent LBT failures are triggered on the RB set, the terminal can reselect a resource pool, meaning selecting the third resource pool.

In an implementation, if the third resource pool includes the partial PRB of one RB set, the third resource pool does not belong to the RB set on which the SL consistent LBT failures are triggered, and the SL consistent LBT failures are not triggered on either of RB sets to which the third resource pool belongs.

In another implementation, if the third resource pool includes the partial PRB of multiple RB sets, the third resource pool does not belong to the RB set on which the SL consistent LBT failures are triggered, and the SL consistent LBT failures are not triggered on either of the multiple RB sets to which the third resource pool belongs.

In another implementation, if the third resource pool includes the partial PRB of the multiple RB sets, the third resource pool does not belong to the RB set on which the SL consistent LBT failures are triggered, and the SL consistent LBT failures are not triggered on at least X RB sets among the multiple RB sets to which the third resource pool belongs. It should be noted that, as an example, X can be obtained through a network configuration or pre-configuration. Optionally, X can be configured based on a resource pool granularity, or it can be configured based on a terminal granularity. For instance, a terminal in an RRC connected state can obtain X via a dedicated signaling. A terminal in an RRC IDLE/INACTIVE state can obtain X through a system information block (SIB). A terminal that is out of coverage (OOC) can obtain X through a pre-configuration.

In step 502, a resource reselection is performed in the third resource pool.

By implementing the embodiments of the present disclosure, when the terminal detects that the SL consistent LBT failures are triggered on the RB set, the terminal reselects a resource pool that does not belong to the RB set on which the SL consistent LBT failures are triggered,, and performs the resource reselection in the resource pool reselected. It can ensure that a sidelink communication can be recovered timely when the SL consistent LBT failures occur for the terminal, thereby improving a communication efficiency of the terminal in performing the sidelink communication.

In the embodiments provided in the present disclosure above, the method provided in the embodiments of the present disclosure has been introduced from the perspective of the terminal. In order to realize each of the functions in the method of the above embodiments of the present disclosure, the terminal can include a hardware structure and a software module, and realize each of the above functions in a form of the hardware structure, the software module, or a combination of the hardware structure and the software module. A certain function of the above functions can be executed in the form of the hardware structure, the software module, or the combination of the hardware structure and the software module.

Please refer to FIG. 6, which is a block diagram illustrating a communication device 60 according to an embodiment of the present disclosure. The communication device 60 shown in FIG. 6 can include a transceiver module 601 and a processing module 602. The transceiver module 601 can include a sending module and/or a receiving module, the sending module is configured to realize a sending function, and the receiving module is configured to realize a receiving function, and the transceiver module 601 can realize the sending function and/or the receiving function.

The communication device 60 can be an apparatus for handling sidelink (SL) consistent listen-before-talk (LBT) failures. As an example, the communication device 60 can be a terminal, an apparatus in the terminal, or an apparatus that can be used in conjunction with the terminal.

In the case that the communication device 60 is the terminal, the processing module 602 is configured to detect that the SL consistent LBT failures are triggered on a resource block set (RB set), and perform a resource reselection.

In an implementation, the processing module 602 is further configured to determine a first resource pool that the RB set is located in, on which the SL consistent LBT failures are triggered; and perform the resource reselection in the first resource pool.

In a possible implementation, the processing module 602 is further configured to select, from the first resource pool, a resource in a first RB set, and the first RB set is an RB set on which the SL consistent LBT failures are not triggered.

In a possible implementation, the processing module 602 is further configured to determine that sufficient resources are not available in the first resource pool; determine a second resource pool; and perform the resource reselection in the second resource pool.

Optionally, in an implementation method, sufficient resources being not available in the first resource pool includes at least one of: the first resource pool not including the first RB set, and the first RB set is the RB set on which the SL consistent LBT failures is not triggered; or the first resource pool including the first RB set, and the first RB set not including sufficient resources to meet a transmission of the terminal.

In an implementation, the processing module 602 is further configured to determine a second resource pool, and perform the resource reselection in the second resource pool.

In a possible implementation, the second resource pool includes at least one RB set on which the SL consistent LBT failures are not triggered, and the processing module 602 is further configured to: select, from the second resource pool, a resource of the RB set on which the SL consistent LBT failures are not triggered.

In another implementation, the processing module 602 is further configured to: determine a third resource pool, and the third resource pool includes a partial physical resource block (PRB) of one or more RB sets, the third resource pool does not belong to an RB set on which the SL consistent LBT failures are triggered, and the SL consistent LBT failures are not triggered on either of RB sets to which the third resource pool belongs; and perform the resource reselection in the third resource pool.

In a possible implementation, an allocation mode of a SL transmission resource for the terminal is a second allocation mode, which is a mode that the terminal autonomously selects its transmission resources.

Regarding the apparatus in the above embodiments, the specific manners in which the respective modules perform operations have been described in detail in the embodiments related to the method, and no detailed description will be provided here.

Please refer to FIG. 7, which is a block diagram illustrating another communication device 70 according to an embodiment of the present disclosure. The communication device 70 can be a terminal, or a chip, a system on chip or a processor that supports the terminal to implement the above method. The communication device can be configured to implement the method described in the method embodiments, which can refer to descriptions in the method embodiments.

The communication device 70 can include one or more processors 701. The processor 701 can be a general processor or a dedicated processor. For example, the processor can be a baseband processor or a central processor. The baseband processor can be configured to process a communication protocol and communication data, and the central processor can be configured to control a communication device (e.g., a base station, a baseband chip, a terminal, a terminal chip, a DU or CU, etc.), to execute a computer program, and process data of the computer program.

Optionally, the communication device 70 can further include one or more memories 702 with a computer program 704 stored thereon. The processor 701 executes the computer program 704, so that the communication device 70 performs the method as described in the above method embodiments. Optionally, the memory 702 can further store data. The communication device 70 and the memory 702 can be independently configured or integrated together.

Optionally, the communication device 70 can further include a transceiver 705 and an antenna 706. The transceiver 705 can be referred to as a transceiving unit, a transceiver machine or a transceiving circuit, etc., for implementing a transceiving function. The transceiver 705 can include a receiver and a transmitter. The receiver can be referred to as a receiver machine or a receiving circuit, etc., for implementing a receiving function; the transmitter can be referred to as a transmitter machine or a transmitting circuit, etc., for implementing a transmitting function.

Optionally, the communication device 70 can further include one or more interface circuits 707. The interface circuit 707 is configured to receive code instructions and transmit the code instructions to the processor 701. The processor 701 runs the code instructions, to cause the communication device 70 to perform the method as described in the above method embodiments.

In the case where the communication device 70 is a terminal, the processor 701 is configured to perform S201 in FIG. 2; S301 and S302 in FIG. 3; S401 in FIG.4; or S501 and S502 in FIG. 5.

In an implementation, the processor 701 can include a transceiver configured to implement receiving and transmitting functions. For example, the transceiver can be a transceiving circuit, or an interface, or an interface circuit. The transceiving circuit, the interface or the interface circuit configured to implement the receiving and transmitting functions can be separate or integrated together. The transceiving circuit, the interface or the interface circuit can be configured to read and write codes/data, or the transceiving circuit, the interface or the interface circuit can be configured to transmit or deliver a signal.

In an implementation, the processor 701 can be stored with a computer program. When the computer program is running on the processor 701, the communication device 70 can be caused to perform the method as described in the above method embodiments. The computer program can be solidified in the processor 701, in which case the processor 701 can be implemented by hardware.

In an implementation, the communication device 70 can include a circuit that can implement a transmitting or receiving or communication function in the above method embodiments. The processor and the transceiver described in the present disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments can be a terminal, but the scope of the communication device described in the present disclosure is not limited, and a structure of the communication device may not be limited by FIG. 7. The communication device can be a stand-alone device or can be a part of a larger device. For example, the communication device can be the following.
(1) a stand-alone integrated circuit (IC), or a chip, or a system on chip or a subsystem;
(2) a set of one or more ICs, optionally, which can also include a storage component for storing data and a computer program;
(3) an ASIC, such as a Modem;
(4) a module that can be embedded within other devices;
(5) a receiver, a terminal, a smart terminal, a cellular phone, a wireless device, a handset, a mobile unit, a vehicle-mounted device, a network device, a cloud device, an artificial intelligence device, etc.;
(6) others, and so forth.

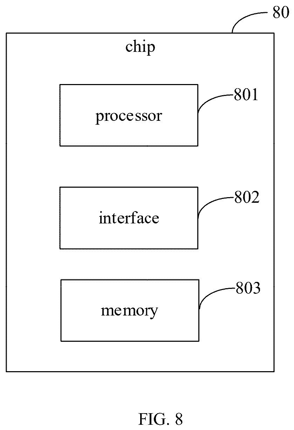

In the case that the communication device can be a chip or a system on chip, FIG. 8 can be referred, which is a block diagram illustrating a chip according to an embodiment of the present disclosure. The chip in FIG. 8 includes a processor 801 and an interface 802. The number of processors 801 can be one or more and the number of interfaces 802 can be more than one.

In a case that the chip is configured to implement functions of the terminal in the embodiments of the present disclosure, the processor 801 is configured to detect that the SL consistent LBT failures are triggered on a resource block set (RB set), and perform a resource reselection.

In an implementation, the processor 801 is further configured to determine a first resource pool that the RB set is located in, on which the SL consistent LBT failures are triggered; and perform the resource reselection in the first resource pool.

In a possible implementation, the processor 801 is further configured to select, from the first resource pool, a resource in a first RB set, and the first RB set is an RB set on which the SL consistent LBT failures are not triggered.

In a possible implementation, the processor 801 is further configured to determine that sufficient resources are not available in the first resource pool; determine a second resource pool; and perform the resource reselection in the second resource pool

Optionally, in an implementation method, sufficient resources being not available in the first resource pool includes at least one of: the first resource pool not including the first RB set, and the first RB set is the RB set on which the SL consistent LBT failures are not triggered; or the first resource pool including the first RB set, and the first RB set not including sufficient resources to meet a transmission of the terminal.

In an implementation, the processor 801 is further configured to determine a second resource pool, and perform the resource reselection in the second resource pool.

In a possible implementation, the second resource pool includes at least one RB set on which the SL consistent LBT failures are not triggered, and the processor 801 is further configured to: select, from the second resource pool, a resource of the RB set on which the SL consistent LBT failures are not triggered.

In another implementation, the processor 801 is further configured to: determine a third resource pool, and the third resource pool includes a partial physical resource block (PRB) of one or more RB sets, the third resource pool does not belong to an RB set on which the SL consistent LBT failures are triggered, and the SL consistent LBT failures are not triggered on either of RB sets to which the third resource pool belongs; and perform the resource reselection in the third resource pool.

In a possible implementation, an allocation mode of a SL transmission resource for the terminal is a second allocation mode, which is a mode that the terminal autonomously selects its transmission resources.

Optionally, the chip further includes a memory 803, configured to store necessary computer program and data.

Those skilled in the related art can understand that, various illustrative logical blocks and steps listed in embodiments of the present disclosure, can be implemented by electronic hardware, computer software or a combination of the electronic hardware and the computer software. Whether the function is implemented by the hardware or the software depends on specific applications and design requirements for an overall system. Those skilled in the art can implement the functions by using various methods for each specific application, but such an implementation should not be understood as beyond the protection scope of embodiments of the present disclosure.

A readable storage medium with instructions stored is further provided in the present disclosure. When the instructions are executed by a computer, functions in any method embodiment are implemented.

A computer program product is further provided in the present disclosure. The computer program product implements functions of any of the above method embodiment when executed by a processor.

In the above embodiments, the functions can be wholly or partially implemented by software, hardware, firmware, or any combination of them. When implemented by software, the functions can be implemented in whole or in part in the form of a computer program product. The computer program product includes one or more computer programs. Procedures or functions according to embodiments of the present disclosure are wholly or partially generated when the computer program is loaded and executed on a computer. The computer can be a general computer, a special purpose computer, a computer network, or other programmable device. The computer program can be stored in a computer-readable storage medium or transmitted from one computer-readable storage medium to another. For example, the computer program can be transmitted from one website, computer, server, or data center to another via wire (such as a coaxial cable, a fiber optic, a digital subscriber line (DSL)) or wireless (such as infrared, wireless, microwave). The computer-readable storage medium can be any available medium that can be accessed by a computer or a data storage device such as a server that integrates one or more of the available media, and a data center. The readable medium can be a magnetic medium (such as a floppy disk, a hard disk and a magnetic tape), an optical medium (such as a digital video disk (DVD)), or a semiconductor medium (such as a solid state disk (SSD)).

Those skilled in the art can understand that various numbers such as first and second involved in present disclosure are distinguished merely for convenience of description, and are not intended to limit the scope of embodiments of the present disclosure, but also to indicate an order of precedence.

The phrase "at least one" in the present disclosure can also be described as one or more, and the phrase "a plurality of" can refer to two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure can be configured or predefined. Values of information in tables are only examples, and can be configured as other values, which are not limited in the present disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, can be made based on the above tables. Names of parameters shown in headers in the tables can be other names understandable by the communication apparatus, and values or representations of the parameters can be other values or representations understandable by the communication apparatus. When the above tables are implemented, other data structures can be used, and for example, arrays, queues, containers, stacks, linear lists, pointers, linked lists, trees, graphs, structures, classes, heaps or hash tables can be used.

Predefined in the present disclosure can be understood as defined, predefined, stored, pre-stored, pre-negotiated, pre-configured, solidified or pre-fired.

Those skilled in the related art can realize that, in combination with units and algorithm steps of the examples described in embodiments of the present disclosure, can be implemented by an electronic hardware or a combination of an electronic hardware and a computer software. Whether the functions are executed by the hardware or the software depends on a specific application and a design constraint of the technical solution. Those skilled in the art can adopt different methods for each specific application to implement the described functions, but such implementation should not be considered beyond the scope of the present disclosure.

Those skilled in the art can clearly understand that, a specific working process of a system, an apparatus and a unit described above can refer to a corresponding process in the above method embodiments, which will not be repeated here.

The above are only specific implementations of the present disclosure. However, the protection scope of the present disclosure is not limited here. Changes and substitutions that can be easily considered by those skilled in the art shall be contained within the protection scope of the present disclosure. Thus, the protection scope of the present disclosure shall be subject to the protection scope of claims.

## Claims

1. A method for handling sidelink (SL) consistent listen-before-talk (LBT) failures, performed by a terminal, comprising:
detecting that the SL consistent LBT failures are triggered on a resource block set (RB set); and
performing a resource reselection.

2. The method according to claim 1, wherein performing the resource reselection comprises:
determining a first resource pool that the RB set is located in, wherein the SL consistent LBT failures are triggered on the RB set; and
performing the resource reselection in the first resource pool.

3. The method according to claim 2, wherein performing the resource reselection in the first resource pool comprises:
selecting, from the first resource pool, a resource in a first RB set, wherein the first RB set is an RB set on which the SL consistent LBT failures are not triggered.

4. The method according to claim 2, further comprising:
determining that sufficient resources are not available in the first resource pool;
determining a second resource pool; and
performing the resource reselection in the second resource pool.

5. The method according to claim 4, wherein determining that sufficient resources are not available in the first resource pool comprises at least one of:
the first resource pool not comprising the first RB set, wherein the first RB set is the RB set on which the SL consistent LBT failures are not triggered; or
the first resource pool comprising the first RB set, and the first RB set not comprising sufficient resources to meet a transmission of the terminal.

6. The method according to any one of claims 2 to 5, wherein performing the resource reselection comprises:
determining a second resource pool, wherein the second resource pool is different from the first resource pool; and
performing the resource reselection in the second resource pool.

7. The method according to claim 4 or 6, wherein the second resource pool comprises at least one RB set on which the SL consistent LBT failures are not triggered, and performing the resource reselection in the second resource pool comprises:
selecting, from the second resource pool, a resource of the RB set on which the SL consistent LBT failures are not triggered.

8. The method according to claim 1, wherein performing the resource reselection comprises:
determining a third resource pool, wherein the third resource pool comprises a partial physical resource block (PRB) of one or more RB sets, the third resource pool does not belong to an RB set on which the SL consistent LBT failures are triggered, and the SL consistent LBT failures are not triggered on either of RB sets to which the third resource pool belongs; and
performing the resource reselection in the third resource pool.

9. The method according to any one of claims 1 to 8, wherein an allocation mode of a SL transmission resource for the terminal is a mode that the terminal autonomously selects its transmission resource.

10. An apparatus for handling sidelink (SL) consistent listen-before-talk (LBT) failures, comprising:
a processing module, configured to detect that the SL consistent LBT failures are triggered on a resource block set (RB set),
wherein the processing module is further configured to perform a resource reselection.

11. The apparatus according to claim 10, wherein the processing module is further configured to:
determine a first resource pool that the RB set is located in, wherein the SL consistent LBT failures are triggered on the RB; and
perform the resource reselection in the first resource pool.

12. The apparatus according to claim 11, wherein the processing module is further configured to:
select, from the first resource pool, a resource in a first RB set, wherein the first RB set is an RB set on which the SL consistent LBT failures are not triggered.

13. The apparatus according to claim 11, wherein the processing module is further configured to:
determine that sufficient resources are not available in the first resource pool;
determine a second resource pool; and
perform the resource reselection in the second resource pool.

14. The apparatus according to claim 13, wherein sufficient resources being not available in the first resource pool comprises at least one of:
the first resource pool not comprising the first RB set, wherein the first RB set is the RB set on which the SL consistent LBT failures are not triggered; or
the first resource pool comprising the first RB set, and the first RB set not comprising sufficient resources to meet a transmission of the terminal.

15. The apparatus according to any one of claims 11 to 14, wherein the processing module is further configured to:
determine a second resource pool, wherein the second resource pool is different from the first resource pool; and
perform the resource reselection in the second resource pool.

16. The apparatus according to claim 13 or 15, wherein the second resource pool comprises at least one RB set on which the SL consistent LBT failures are not triggered, and the processing module is further configured to:
select, from the second resource pool, a resource of the RB set on which the SL consistent LBT failures are not triggered.

17. The apparatus according to claim 10, wherein the processing module is further configured to:
determine a third resource pool, wherein the third resource pool comprises a partial physical resource block (PRB) of one or more RB sets, the third resource pool does not belong to an RB set on which the SL consistent LBT failures are triggered, and the SL consistent LBT failures are not triggered on either of RB sets to which the third resource pool belongs; and
perform the resource reselection in the third resource pool.

18. The apparatus according to any one of claims 10 to 17, wherein an allocation mode of a SL transmission resource for the terminal is a mode that the terminal autonomously selects its transmission resource.

19. A communication device, comprising a processor and a memory, wherein the memory stores a computer program that, when executed by the processor, causes the communication device to implement the method according to any one of claims 1 to 9.

20. A computer-readable storage medium storing instructions that, when executed, the method according to any one of claims 1 to 9 is implemented.
